# EUROPÄISCHE PATENTANMELDUNG

(11) **EP 0 862 195 A2**
(43) Veröffentlichungstag der Anmeldung: **02.09.1998**
(21) Anmeldenummer: 98102070.4
(22) Anmeldetag: 06.02.1998
(51) Int. Cl.: H01H 13/18

(54) **Schaltwellenrastvorrichtung mit elektrischer Schalteinrichtung**

(30) Priorität: 26.02.1997 DE 19707595
(71) Anmelder: Ford Global Technologies, Inc., Dearborn, Michigan 48126 (US)
(72) Erfinder: Neunzig, Theo, 50259 Pulheim (DE); Schneider, Joachim,Dipl.-Ing, 42799 Leichlingen (DE)
(74) Vertreter: Bonsmann, Manfred, Dipl.-Ing.

(57) **Zusammenfassung**

Eine Schaltwellenrastvorrichtung (1) zur Arretierung von Schaltungselementen eines Getriebes, vorzugsweise Kraftfahrzeuggetriebes, weist einen in Längsrichtung eines hülsenartigen Gehäuses (2) in diesem entgegen einer Vorspannkraft verschiebbar angeordneten Hubkolben (4) mit einer an einem Stirnendbereich des Hubkolbens leicht drehbar angebrachten Arretierungskugel (16) auf. Weiterhin ist eine elektrische Schalteinrichtung (25) vorgesehen, die über einen von dem Hubkolben (4) mitnehmbaren Druckstößel (11) betätigbar ist. Die Schaltwellenrastvorrichtung (1) und die elektrische Schalteinrichtung (25) sind jeweils als gesonderte Bauteile ausgebildet, die über leicht betätigbare Arretiereinrichtungen miteinander verbindbar sind. Die gesonderte Ausbildung von Schaltwellenrastvorrichtung (1) und elektrischer Schalteinrichtung (25) hat den Vorteil, daß die einzelnen Bauelemente gesondert voneinander hergestellt und gelagert und dann bei der Montage des Kraftfahrzeuges in einfacher Weise funktionsgerecht miteinander verbindbar sind, wodurch auch die Servicefreundlichkeit erhöht wird.

## Beschreibung

Die Erfindung betrifft eine Schaltwellenrastvorrichtung zur Arretierung von Schaltungselementen eines Getriebes, vorzugsweise Kraftfahrzeuggetriebes, mit einer elektrischen Schalteinrichtung, welche über einen in der Schaltwellenrastvorrichtung vorgesehenen Druckstößel aktivierbar ist.

Schaltwellenrastvorrichtungen dienen bei Kraftfahrzeugen dazu, die üblicherweise vorgesehenen vier bis fünf Vorwärtsgänge und den Rückwärtsgang durch Eingreifen einer Arretierungskugel in Justierausnehmungen auf der Schaltwelle in der jeweils gewünschten Position zu halten. Um z.B. bei Einlegen des Rückwärtsganges gleichzeitig das Rückfahrlicht des Kraftfahrzeuges einzuschalten ist es aus DE 43 30 917 C1 bekannt, im Inneren der Schaltwellenrastvorrichtung einen elektrischen Schalter vorzusehen, der bei Erreichen der Rückwärtsgangposition schaltet und dementsprechend das Rückfahrlicht einschaltet.

Der Erfindung liegt die Aufgabe zugrunde, die Herstellung und die Montage von Schaltwellenrastvorrichtungen mit elektrischer Schalteinrichtung der eingangs genannten Art zu vereinfachen.

Zur Lösung dieser Aufgabe ist erfindungsgemäß vorgesehen, daß die Schaltwellenrastvorrichtung und die elektrische Schalteinrichtung jeweils als über leicht betätigbare Arretiereinrichtungen miteinander verbindbare gesonderte Bauteile ausgebildet sind. Hierbei ist vorteilhaft, daß der vor dem Einbau in ein Kraftfahrzeug erforderliche Test der Schaltwellenrastvorrichtung unabhängig von der elektrischen Schalteinrichtung im Bereich des Getriebebaus erfolgen kann. Die elektrische Schalteinrichtung kann dann später bei der Endmontage des Kraftfahrzeuges angebracht werden. Weiterhin führt die Erfindung zu größerer Servicefreundlichkeit, da die elektrische Schalteinrichtung im Falle eines Defektes ohne weiteres ausgetauscht werden kann.

Bekannte Schaltwellenrastvorrichtungen weisen einen in Längsrichtung eines hülsenartigen Gehäuses in diesem entgegen einer Vorspannkraft verschiebbar angeordneten Hubkolben mit einer an einem Stirnendbereich leicht drehbar angeordneten Arretierungskugel auf. Dabei ist der Druckstößel von dem Hubkolben mitnehmbar. In zweckmäßiger Ausgestaltung der Erfindung kann vorgesehen sein, daß das der Arretierungskugel abgewandte Stirnende des hülsenartigen Gehäuses von einer Kappe aus elastischem Werkstoff umschlossen ist, gegen deren innere Stirnseite der Druckstößel mit seinem dem Hubkolben abgewandten Stirnende anliegt, und eine äußere Halterung für die Kappe gleichzeitig als erster Teilbereich einer clipsartigen Arretiereinrichtung zur Anbringung der elektrischen Schalteinrichtung ausgebildet ist, und die elektrische Schalteinrichtung ein in montiertem Zustand die Kappe übergreifendes Gehäuse mit dem zweiten Teilbereich der clipsartigen Arretiereinrichtung und mit einer gegen die Kappe anliegenden, eingespannten Schaltmembran aufweist, welche in ihrer ausgelenkten Position Kontakteinrichtungen elektrisch miteinander verbindet.

Hierbei ist besonders vorteilhaft, daß die z.B. Kontaktstifte aufweisenden Kontakteinrichtungen der elektrischen Schalteinrichtung und die eigentliche Schaltwellenrastvorrichtung durch die vorzugsweise als Gummikappe ausgebildete Kappe und die Schaltmembran voneinander getrennt sind.

In weiterer Ausbildung der Erfindung kann vorgesehen sein, daß das Gehäuse der elektrischen Schalteinrichtung ein den zweiten Teilbereich der clipsartigen Arretiereinrichtung aufweisendes Membrangehäuse und ein mit diesem verbindbares Kontaktstiftgehäuse aufweist, und daß die Schaltmembran im Verbindungsbereich des Membrangehäuses und des Kontaktstiftgehäuses eingespannt ist.

Das Kontaktstiftgehäuse selbst kann als Aufnahmeteil oder Einsteckteil einer elektrischen Steckverbindungseinrichtung ausgebildet sein.

Es kann aber auch vorgesehen sein, daß das Kontaktstiftgehäuse als Verbindungen der Kontaktstifte mit einem elektrischen Kabel aufweisende Anschlußeinrichtung ausgebildet ist.

In weiterer Ausbildung der Erfindung kann vorgesehen sein, daß die Halterung der Kappe als Haltering ausgebildet ist, welcher innenseitig ein Überclipsen über die Kappe erleichternde Nuten und außenseitig den ersten Teilbereich der clipsartigen Arretiereinrichtung bildende Ausnehmungen mit sägezahnartigen Vorsprüngen aufweist, gegen die in arretiertem Zustand den zweiten Teilbereich bildende clipsartige Rastelemente der elektrischen Schalteinrichtung anliegen.

Die Erfindung wird nachfolgend anhand des in den Zeichnungen schematisch dargestellten Ausführungsbeispiels näher erläutert. Es zeigen:
- Fig. 1: eine Draufsicht auf eine Schaltwellenrastvorrichtung ohne elektrische Schalteinrichtung;
- Fig. 2: einen Schnitt längs der Linie II-II in Fig. 1;
- Fig. 3: eine schematische Schnittdarstellung längs der Linie III-III in Fig. 2;
- Fig. 4: eine Schnittdarstellung durch die Schaltwellenrastvorrichtung gemäß Fig. 2 mit damit verbundener elektrischer Schalteinrichtung.

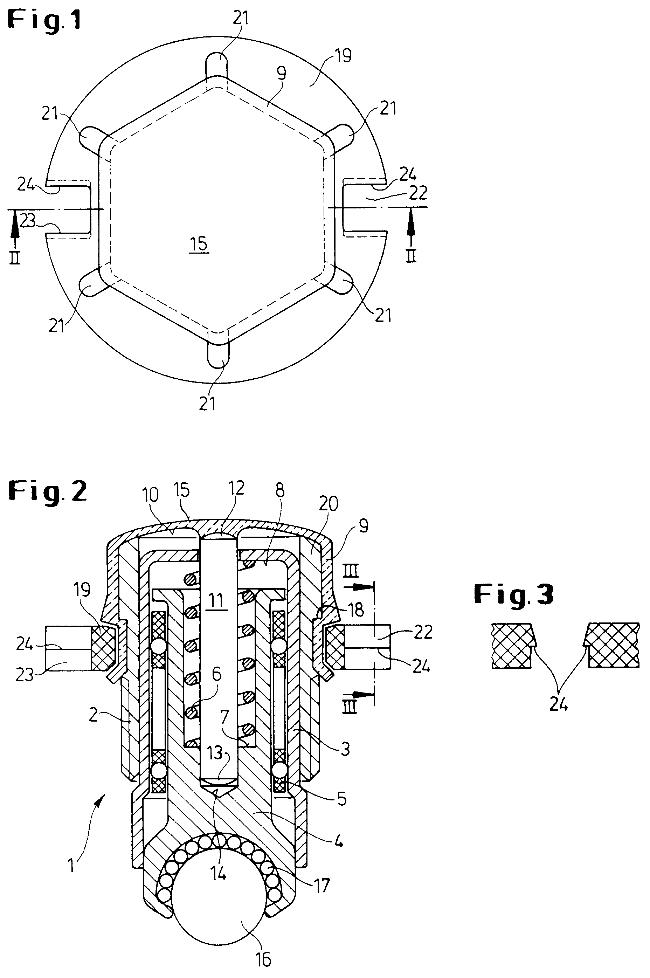

Eine insgesamt mit 1 bezeichnete Schaltwellenrastvorrichtung zur Arretierung (nicht dargestellter) Schaltungselemente eines (nicht dargestellten) Getriebes weist ein hülsenartiges Gehäuse mit einer äußeren, abschnittsweise ein Gewinde aufweisenden Hülse 2 und einer inneren Führungshülse 3 auf, in der ein Hubkolben 4 über ein kugelgelagertes Linearelement 5 entgegen der Vorspannkraft einer Feder 6 verschiebbar angeordnet ist. Die Feder 6 ist mit einem Ende gegen einen umlaufenden Rand 7 des Hubkolbens 4 und mit dem anderen Ende gegen einen abgewinkelten Endbereich 8 der inneren Führungshülse 3 abgestützt. Der obere Bereich des Gehäuses ist in Draufsicht gesehen als Sechskant ausgebildet und von einer beispielsweise aus Gummi bestehenden elastischen Kappe 9 umschlossen. Mit dem inneren Stirnende 10 der Kappe 9 ist ein im Inneren des Hubkolbens 4 angeordneter Druckstößel 11 mit seinem inneren Stirnendbereich 12 verbunden. Der gegenüberliegende Stirnendbereich 13 des Druckstößels ist in der in Fig. 2 gezeigten Position in einem Abstand zu dem Boden 14 einer den Druckstößel aufnehmenden Bohrung des Hubkolbens 4 angeordnet. Wenn der Hubkolben 4 entsprechend der Darstellung in Fig. 2 entgegen der Kraft der Feder 6 nach oben bewegt wird, kommt das Stirnende 13 zur Anlage gegen den Boden 14 und der Druckstößel wird dadurch nach oben bewegt und drückt dann das stirnseitige Ende 15 der elastischen Kappe 9 nach oben.

Die Schaltwellenrastvorrichtung weist außerdem eine Arretierungskugel 16 auf, die über Lagerkugeln 17 in bekannter Weise leicht drehbar gelagert ist.

Zur Anbringung der elastischen Kappe 9 an dem oberen Bereich der Hülse 2 weist die Hülse eine stufenartige Ausnehmung 18 auf. Die elastische Kappe 9 wird in montiertem Zustand von einer als Haltering 19 ausgebildeten Halterung umfaßt. Der Haltering 19 weist innenseitig ein Sechskantprofil entsprechend dem Sechskantprofil 20 der Hülse 2 mit Nuten 21 auf, welche ein Überclipsen des Halteringes 19 über die Kappe 9 erleichtern. An der Außenseite des Halteringes sind gegenüberliegend Ausnehmungen 22 und 23 mit sägezahnartigen Vorsprüngen 24 vorgesehen. Die Ausnehmungen 22 und 23 mit den sägezahnartigen Vorsprüngen 24 bilden einen ersten Teilbereich einer clipsartigen Arretiereinrichtung zur leicht betätigbaren Anbringung einer elektrischen Schalteinrichtung.

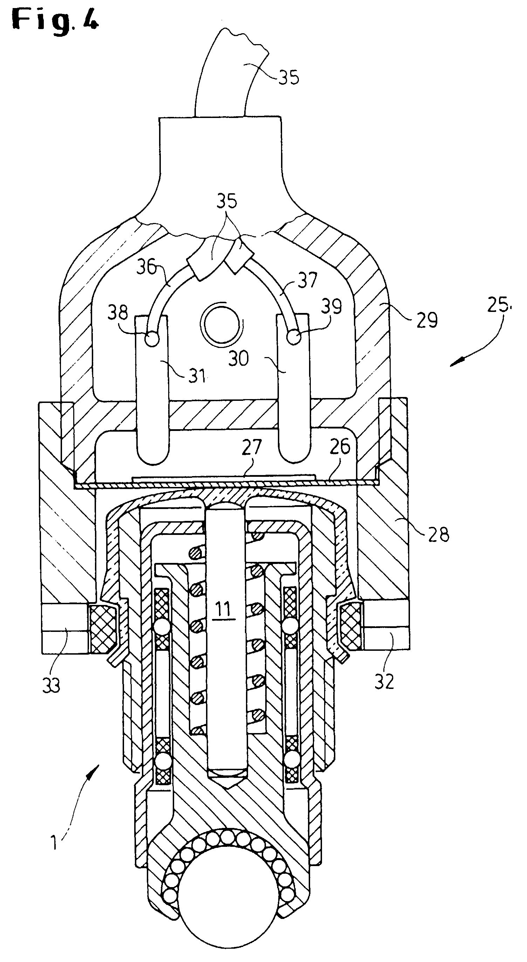

Eine in Fig. 4 in mit der Schaltwellenrastvorrichtung 1 verbundenem Zustand dargestellte elektrische Schalteinrichtung 25 weist eine in montiertem Zustand die Kappe 9 teilweise übergreifende Gehäuseanordnung mit einer darin eingespannten Schaltmembran 26 und einer Kontaktplatte 27 auf. Das Gehäuse ist zweiteilig ausgebildet und weist ein Membrangehäuse 28 und ein Kontaktstiftgehäuse 29 mit darin angebrachten elektrischen Kontaktstiften 30 und 31 auf. Die Schaltmembran 26 ist im Verbindungsbereich des Membrangehäuses 28 und des Kontaktstiftgehäuses 29 eingespannt. Wie ohne weiteres ersichtlich, werden die beiden Kontaktstifte 30 und 31 über die Kontaktplatte 27 elektrisch miteinander verbunden, wenn der Druckstößel 11 entsprechend der Darstellung in Fig. 2 bzw. in Fig. 4 nach oben bewegt wird und dadurch die Schaltmembran über die elastische Kappe 9 soweit nach oben bewegt wird, daß die Kontaktplatte 27 gegen die unteren Stirnenden der Kontaktstifte 30 und 31 zur Anlage kommt.

Im unteren Bereich des Membrangehäuses 28 sind clipsartige Rastelemente 32, 33 vorgesehen, die in arretiertem Zustand von den sägezahnartigen Vorsprüngen 24 der außenseitigen Ausnehmungen 22, 23 des Halterings 19 gehalten werden.

Das Kontaktstiftgehäuse ist als Anschlußeinrichtung für ein elektrisches Kabel 35 ausgebildet. Elektrische Adern 36 und 37 des Kabels sind über Verlötpunkte 38, 39 mit den hier mit 30a und 31a bezeichneten Schaltstiften verbunden. Das Kabel 35 ist feuchtigkeitssicher aus dem Kontaktstiftgehäuse 34 nach außen herausgeführt.

Es kann auch vorgesehen sein, daß das Kontaktstiftgehäuse kein in dieses eingeführtes und fest mit diesem verbundenes elektrisches Kabel aufweist, sondern daß das Kontaktstiftgehäuse als Aufnahmeteil einer elektrischen Steckverbindungseinrichtung ausgebildet ist.

## Patentansprüche

1. Schaltwellenrastvorrichtung zur Arretierung von Schaltungselementen eines Getriebes, vorzugsweise Kraftfahrzeuggetriebes, mit einer elektrischen Schalteinrichtung, welche über einen in der Schaltwellenrastvorrichtung vorgesehenen Druckstößel aktivierbar ist, dadurch gekennzeichnet, daß die Schaltwellenrasteinrichtung (1) und die elektrische Schalteinrichtung (25) jeweils als über leicht betätigbare Arretiereinrichtungen (22, 23 bzw. 32, 33) miteinander verbindbare gesonderte Bauteile ausgebildet sind.

2. Schaltwellenrastvorrichtung nach Anspruch 1, mit einem in Längsrichtung eines hülsenartigen Gehäuses in diesem entgegen einer Vorspannkraft verschiebbar angeordneten Hubkolben mit einer an einem Stirnendbereich leicht drehbar angeordneten Arretierungskugel, wobei der zur Betätigung der elektrischen Schalteinrichtung vorgesehene Druckstößel von dem Hubkolben mitnehmbar ist, dadurch gekennzeichnet, daß das der Arretierungskugel (16) abgewandte Stirnende des hülsenartigen Gehäuses (2) von einer Kappe (9) aus elastischem Werkstoff umschlossen ist, gegen deren innere Stirnseite (10) der Druckstößel (11) mit seinem dem Hubkolben (4) abgewandten Stirnende (12) anliegt, und eine äußere Halterung (19) für die Kappe (9) gleichzeitig als erster Teilbereich einer clipsartigen Arretiereinrichtung (22, 23) zur Anbringung der elektrischen Schalteinrichtung (25, 25a) ausgebildet ist, und die elektrische Schalteinrichtung ein in montiertem Zustand die Kappe (9) übergreifendes Gehäuse mit dem zweiten Teilbereich (32, 33) der clipsartigen Arretiereinrichtung und mit einer gegen die Kappe anliegenden, eingespannten Schaltmembran (26) aufweist, welche in ihrer ausgelenkten Position Kontaktstifte (30, 31 bzw. 30a, 31a) elektrisch miteinander verbindet.

3. Schaltwellenrastvorrichtung nach Anspruch 2, dadurch gekennzeichnet, daß das Gehäuse der elektrischen Schalteinrichtung (25) ein den zweiten Teilbereich (32, 33) der clipsartigen Arretiereinrichtung aufweisendes Membrangehäuse (28) und ein mit diesem verbindbares Kontaktstiftgehäuse (29, 34) aufweist, und die Schaltmembran (26) im Verbindungsbereich des Membrangehäuses und des Kontaktstiftgehäuses eingespannt ist.

4. Schaltwellenrastvorrichtung nach Anspruch 3, dadurch gekennzeichnet, daß das Kontaktstiftgehäuse als Aufnahmeteil oder Einsteckteil einer elektrischen Steckverbindungseinrichtung ausgebildet ist.

5. Schaltwellenrastvorrichtung nach Ansprch 3, dadurch gekennzeichnet, daß das Kontaktstiftgehäuse (29) als Verbindungen (38, 39) der Kontaktstifte (30, 31) mit einem elektrischen Kabel (35) aufweisende Anschlußeinrichtung ausgebildet ist.

6. Schaltwellenrastvorrichtung nach einem der Ansprüche 1 bis 5, dadurch gekennzeichnet, daß die Halterung der Kappe als Haltering (19) ausgebildet ist, welcher innenseitig ein Überclipsen über die Kappe (9) erleichternde Nuten (21) und außenseitig den ersten Teilbereich der clipsartigen Arretiereinrichtung bildende Ausnehmungen (22, 23) mit sägezahnartigen Vorsprüngen (24) aufweist, gegen die in arretiertem Zustand den zweiten Teilbereich (32, 33) bildende clipsartige Rastelemente der elektrischen Schalteinrichtung (25) anliegen.
